# EUROPEAN PATENT APPLICATION

(11) **EP 4 560 561 A1**
(43) Date of publication of application: **28.05.2025**
(21) Application number: 23220002.2
(22) Date of filing: 22.12.2023
(51) Int. Cl.: G06Q 30/0202, G06Q 30/0201, G06Q 30/0283, G06N 20/20, G06N 3/045, G06N 3/08

(54) **FORECASTING USING DIFFERENTIAL-BASED MACHINE-LEARNING ARCHITECTURE**

(30) Priority: 21.11.2023 US 202363601730 P
(71) Applicant: Hitachi Energy Ltd, 8050 Zürich (CH)
(72) Inventor: HAQ, Nandinee, Gloucester, ON, K1T0Y6 (CA); FENG, Xiaoming, Cary, 27519 (US)
(74) Representative: Vossius & Partner Patentanwälte Rechtsanwälte mbB

(57) **Abstract**

Conventional forecast models assume that the underlying data are stationary. In the case of non-stationary data, the conventional forecast model must be increased in complexity, or otherwise, must be frequently retrained. Embodiments are disclosed of a forecast model that accounts for non-stationary data, without increased complexity and without an increase in the frequency of retraining, by recasting the forecasting problem as a matter of tracking differentials in the data. In particular, variables (e.g., covariates) are input into differential determinations and/or intermediate machine-learning models to determine differences in past and forecasted values of a plurality of features. These differences are then input into a machine-learning model to predict a change in the value of the target, which is aggregated with a past value of the target to produce a forecasted value of the target.

## Description

### BACKGROUND

### Field of the Invention

The embodiments described herein are generally directed to machine learning, and, more particularly, to forecasting using a differential-based machine-learning architecture.

### Description of the Related Art

Typical machine-learning solutions for forecasting energy prices involve training a machine-learning model to forecast future energy prices based on training data that comprise historical energy prices and covariates that impact those energy prices. Covariates may include weather parameters, power load, power supply, and/or the like.

Most of these data-driven machine-learning models rely on the underlying assumption that the data are stationary. Stationary data are data whose statistical properties (e.g., mean, standard deviations, etc.) are the same in the training data as in the operational data.

However, long-term trends and periodicities exist in energy prices and the relevant covariates. For example, weather parameters, electrical loads, power generation, and the like, exhibit seasonal patterns and can exhibit significant variation over time. Thus, the statistical properties of the operational data, which is input during operation of the machine-learning model, may shift significantly from the data on which the machine-learning model was trained. As a result, the accuracy of the machine-learning model decreases over time.

Thus, the machine-learning model must either be frequently retrained on new training data, possessing statistical properties that match the statistical properties of the operational data, or somehow capture the long-term trends and periodicities in the data. Retraining the machine-learning model requires significant computational resources in terms of generating new training data, training and evaluating the machine-learning model with the new training data, and the like. On the other hand, capturing the trends, periodicities, and other long-term patterns in the data require a more complex machine-learning model, which increases the computational resources required to train and operate the machine-learning model.

### SUMMARY

Accordingly, systems, methods, and non-transitory computer-readable media are disclosed for forecasting using a differential-based machine-learning architecture that does not require frequent retraining to maintain accuracy and does not require a complex machine-learning model to capture long-term patterns in the data.

In an embodiment, a method comprises using at least one hardware processor to, in each of one or more iterations: for each of a plurality of features, determine a difference between a past value of the feature at a past time and a forecasted value of the feature at a future time; input the differences, determined for the plurality of features, to a machine-learning model that has been trained to predict differential information based on the differences determined for the plurality of features; and forecast a value of a target at the future time based on the differential information.

Forecasting the value of the target based on the differential information may comprise aggregating the differential information with a past value of the target at the past time. The method may further comprise using the at least one hardware processor to: receive a dataset comprising historical data; and in each of the one or more iterations, preprocess the dataset to derive the past value of the target.

The method may further comprise using the at least one hardware processor to: receive a dataset comprising historical and forecasted data; and in each of the one or more iterations, preprocess the dataset to derive the past value and the forecasted value for each of the plurality of features.

The differential information may comprise a predicted change in the value of the target. Forecasting the value of the target based on the differential information may comprise adding the predicted change in the value of the target to a past value of the target at the past time.

The differential information may comprise a probability distribution of a predicted change in the value of the target. Forecasting the value of the target based on the differential information may comprise aggregating the probability distribution with a past value of the target at the past time.

For each of at least one of the plurality of features, determining the difference between the past value and the forecasted value of the at least one feature may comprise: receiving one or more variables related to the at least one feature; and inputting the one or more variables to an intermediate machine-learning model that has been trained to predict a difference between the past value and the forecasted value of the at least one feature based on the one or more variables. The at least one feature may be two or more of the plurality of features. The one or more variables related to one of the two or more features may overlap with the one or more variables related to at least one other one of the two or more features. For a first one of the two or more features, the one or more variables related to that first feature may be input to a first intermediate machine-learning model to determine the difference between the past and forecasted values for the first feature, for a second one of the two or more features, the one or more variables related to that second feature may be input to a second intermediate machine-learning model to determine the difference between the past and forecasted values for the second feature, wherein the first intermediate machine-learning model is different from the second intermediate machine-learning model.

The one or more iterations may be a plurality of iterations, wherein the past time is successively incremented in each of the plurality of iterations, such that the value of the target is forecasted for each of a plurality of time points spanning a time frame. The time frame may be one or more hours in length.

The target may comprise an energy price, wherein the plurality of features is associated with an electrical system. The plurality of features may comprise one or more parameters of weather in an environment of the electrical system. The plurality of features may comprise one or more parameters of electrical load in the electrical system.

The method may further comprise using the at least one hardware processor to, after forecasting the value of the energy price at the future time, generate a market request based on the forecasted value of the energy price at the future time, and, when the market request comprises a bid to sell energy at the forecasted value of the energy price, further based on a generation capacity of the electrical system at the future time, or, when the market request comprises an offer to sell energy at the forecasted value of the energy price, further based on a load of the electrical system at the future time. The method may further comprise using the at least one hardware processor to, after generating the market request: send the market request to an energy market; receive an acceptance of the market request; and at the future time, control the electrical system to, when the market request comprises a bid, generate power according to the accepted market request, or, when the market request comprises an offer, consume power according to the accepted market request.

The machine-learning model may comprise a random forest algorithm, a gradient-boosting algorithm, a regression algorithm, a support vector machine, or an artificial neural network.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processor-based system, such as a server, and/or in executable instructions stored in a non-transitory computer-readable medium.

### BRIEF DESCRIPTION OF THE DRAWINGS

The details of the present invention, both as to its structure and operation, may be gleaned in part by study of the accompanying drawings, in which like reference numerals refer to like parts, and in which:
FIG. 1 illustrates an example infrastructure, in which any of the processes described herein may be implemented, according to an embodiment;
FIG. 2 illustrates an example processing system, by which any of the processes described herein may be executed, according to an embodiment;
FIG. 3 illustrates an example data flow for forecasting, according to an embodiment;
FIGS. 4A and 4B illustrate an example architecture of a forecast model, according to alternative embodiments;
FIG. 5 illustrates an example process for executing a forecast model, according to an embodiment;
FIG. 6 illustrates an example training process for a forecast model, according to an embodiment; and
FIG. 7 illustrates an example operating process for a forecast model, according to an embodiment.

### DETAILED DESCRIPTION

In an embodiment, systems, methods, and non-transitory computer-readable media are disclosed for forecasting using a differential-based machine-learning architecture. After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

### 1. Infrastructure

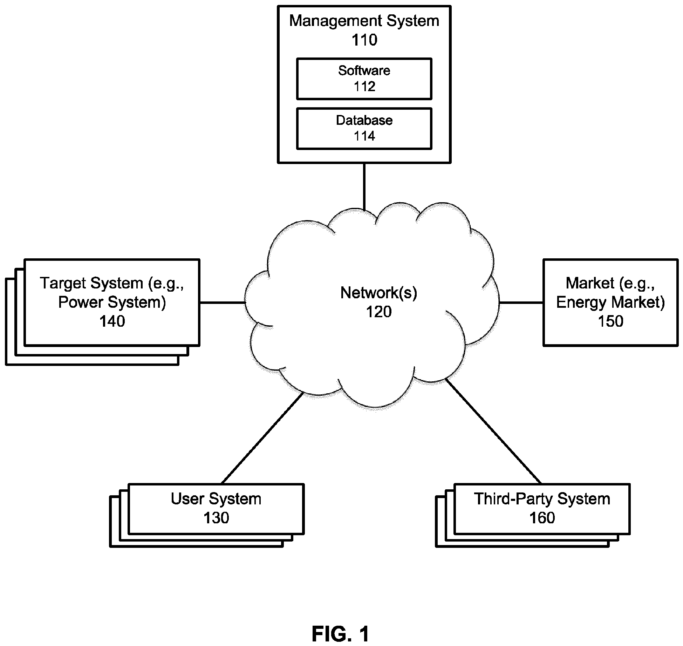

FIG. 1 illustrates an example infrastructure in which any of the disclosed processes may be implemented, according to an embodiment. The infrastructure may comprise a management system 110 (e.g., comprising one or more servers) that hosts and/or executes one or more of the various processes described herein, which may be implemented in software and/or hardware. Examples of management system 110 include, without limitation, a supervisory control and data acquisition (SCADA) system, a power management system (PMS), an energy management system (EMS), a distribution management system (DMS), an advanced DMS (ADMS), an asset management system (ASM), and the like. Management system 110 may comprise dedicated servers, or may instead be implemented in a computing cloud, in which the computational resources of one or more servers are dynamically and elastically allocated to multiple tenants based on demand. In either case, the servers may be collocated (e.g., in a single data center) and/or geographically distributed (e.g., across a plurality of data centers). Management system 110 may also comprise or be communicatively connected to software 112 and/or a database 114. In addition, management system 110 may be communicatively connected, via one or more networks 120, to one or more user systems 130, target systems 140, markets 150, and/or third-party systems 160.

Network(s) 120 may comprise the Internet, and management system 110 may communicate with user system(s) 130, target system(s) 140, market(s) 150, and/or third-party system(s) 160, through the Internet and/or other network using standard transmission protocols, such as HyperText Transfer Protocol (HTTP), HTTP Secure (HTTPS), File Transfer Protocol (FTP), FTP Secure (FTPS), Secure Shell FTP (SFTP), eXtensible Messaging and Presence Protocol (XMPP), Open Field Message Bus (OpenFMB), IEEE Smart Energy Profile Application Protocol (IEEE 2030.5), and the like, as well as proprietary protocols. While management system 110 is illustrated as being connected to various systems through a single set of network(s) 120, it should be understood that management system 110 may be connected to the various systems via different sets of one or more networks. For example, management system 110 may be connected to a subset of user systems 130, target systems 140, markets 150, and/or third-party systems 160 via the Internet, but may be connected to one or more other user systems 130, target systems 140, markets 150, and/or third-party systems 160 via an intranet. Furthermore, while only a few user systems 130, target systems 140, and third-party systems 160, one market 150, one instance of software 112, and one database 114 are illustrated, it should be understood that the infrastructure may comprise any number of user systems 130, target systems 140, markets 150, third-party systems 160, software instances 112, and databases 114.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which agents of an operator of a target system 140 and/or a participant in market 150 can interact with management system 110. These interactions may comprise inputting data (e.g., parameters for configuring the processes described herein) and/or receiving data (e.g., the outputs of processes described herein) via a graphical user interface provided by management system 110 or a system between management system 110 and user system(s) 130. The graphical user interface may comprise screens (e.g., webpages) that include a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in database 114.

Target system(s) 140 may comprise any type of system for which data are monitored, analyzed, and/or acted upon. In general, target system 140 may comprise any system for which data are to be forecasted, for example, for participation in market 150 or other exchange. However, in the context of specific, non-limiting examples that are provided throughout the present disclosure, it will be assumed that target system 140 comprises or consists of a power system that is participating as a consumer and/or supplier in an energy market (i.e., as one example of market 150). A power system may comprise one or more, and generally a plurality of, power resources connected in a network, which may comprise a power distribution network, a power transmission network, and/or the like. The power resources may comprise power generators, energy storage systems, electrical loads (e.g., rechargeable energy storage system or other controllable load, non-controllable load, etc.), and/or the like. The power generators may comprise different types of power generators, such as thermal power plants (e.g., coal, natural gas, nuclear, geothermal, etc.), hydroelectric power plants, renewable resource power plants (e.g., solar, wind, geothermal, etc.), and/or the like. The electrical loads may comprise anything that consumes power, including, without limitation, electric vehicles, appliances, machines, commercial buildings, residential buildings, and/or the like.

Market(s) 150 may comprise any type or types of computing devices capable of wired and/or wireless communication. However, it is generally contemplated that market 150 would comprise one or more servers that implement a market for a tradeable commodity. In the context, of specific, non-limiting examples that are provided throughout the present disclosure, it will be assumed that market 150 is an energy market, through which an energy commodity, such as electricity, heat, and/or fuel, is exchanged. Market 150 may enable participants to offer an amount of a commodity (e.g., energy) and bid on an amount of a commodity, as well as match offers to bids, consummate transactions between matched offers and bids, facilitate the transfer or provision of the purchased commodities, and/or the like.

Third-party system(s) 150 may comprise any type or types of computing devices capable of wired and/or wireless communication. However, it is generally contemplated that third-party system 160 would comprise one or more servers that supply extrinsic data to management system 100. The extrinsic data may represent one or more covariates of a target, and/or represent data from which one or more covariates of the target can otherwise be derived, as discussed elsewhere herein.

Management system 110 may execute software 112, comprising one or more software modules that implement one or more of the disclosed processes. In addition, management system 110 may comprise, be communicatively coupled with, or otherwise have access to database 114 that stores the data input into and/or output from one or more of the disclosed processes. Any suitable database may be utilized in database 114, including without limitation MySQL^{™}, Oracle^{™}, IBM^{™}, Microsoft SQL^{™}, Access^{™}, PostgreSQL^{™}, MongoDB^{™}, and/or the like, and including cloud-based databases, proprietary databases, and unstructured databases.

### 2. Example Processing Device

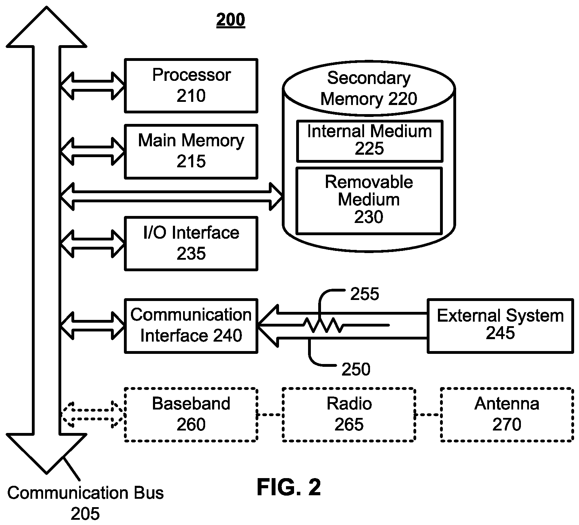

FIG. 2 is a block diagram illustrating an example wired or wireless system 200 that may be used in connection with various embodiments described herein. For example, system 200 may be used as or in conjunction with one or more of the functions, methods, or other processes (e.g., to store and/or execute software 112, store database 114, etc.) described herein, and may represent components of management system 110, user system(s) 130, target system(s) 140, energy market(s) 150, third-party system(s) 160, and/or other processing devices described herein. System 200 can be a server, conventional personal computer, or any other processor-enabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digitalsignal processor), a processor subordinate to the main processor (e.g., back-end processor), an additional microprocessor or controller for dual or multiple processor systems, and/or a coprocessor. Such auxiliary processors may be discrete processors or may be integrated with a main processor 210. Examples of processors 210 which may be used with system 200 include, without limitation, any of the processors (e.g., Pentium^{™}, Core i7^{™}, Xeon^{™}, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos^{™}) available from Samsung Electronics Co., Ltd., of Seoul, South Korea, any of the processors available from NXP Semiconductors N.V. of Eindhoven, Netherlands, and/or the like.

Processor 210 may be connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE), including IEEE 488 general-purpose interface bus (GPIB) or IEEE 696/S-100, and/or the like.

System 200 may comprise a main memory 215. Main memory 215 provides storage of instructions and data for programs executing on processor 210, such as one or more of the processes discussed herein (e.g., embodied in software 112). It should be understood that programs stored in the memory and executed by processor 210 may be written and/or compiled according to any suitable language, including without limitation C/C++, Java, JavaScript, Perl, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

System 200 may also comprise a secondary memory 220. Secondary memory 220 may optionally include an internal medium 225 and/or a removable medium 230. Internal medium 225 may comprise, for example, a hard disk drive (HDD), a solid state drive (SSD), and/or the like. Removable medium 230 may comprise, for example, a magnetic tape drive, a compact disc (CD) drive, a digital versatile disc (DVD) drive, a flash memory drive, and/or the like. Secondary memory 220 is a non-transitory computer-readable medium having computer-executable code (e.g., software 112) and/or other data stored thereon. The computer software or data stored on secondary memory 220 is read into main memory 215 for execution by processor 210.

System 200 may comprise an input/output (I/O) interface 235. I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may comprise a communication interface 240. Communication interface 240 allows software and other data to be transferred between system 200 and external devices, networks, or other external systems 245. For example, data, which may include computer software or executable code, may be transferred to system 200 from external system 245 (e.g., a network server, personal computer, or other device) and/or from system 200 to external system 245, via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated services digital network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer programs (e.g., comprised in software 112), comprising computer-executable code or instructions, are stored in main memory 215 and/or secondary memory 220. Computer programs can also be received via communication interface 240 and stored in main memory 215 and/or secondary memory 220. The computer programs, when executed, enable system 200 to perform one or more of the processes described elsewhere herein.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), and any peripheral device communicatively coupled with communication interface 240, such as external system 245. These non-transitory computer-readable media are means for providing executable code, programming instructions, software, and/or other data to processor(s) 210.

System 200 may also include optional wireless communication components that facilitate wireless communication over a voice network and/or a data network (e.g., in the case of user system 130 that is a smart phone or other mobile device, a sensor and/or actuator within a target system 140, etc.). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive signal, which is sent from radio system 265 to baseband system 260.

Baseband system 260 is also communicatively coupled with processor(s) 210, which may have access to data storage areas 215 and 220. Thus, data, including computer programs, can be received from baseband processor 260 and stored in main memory 210 or in secondary memory 220, or executed upon receipt. Such computer programs, when executed, may enable system 200 to perform one or more of the disclosed processes.

### 3. Example Data Flow for Target System Management

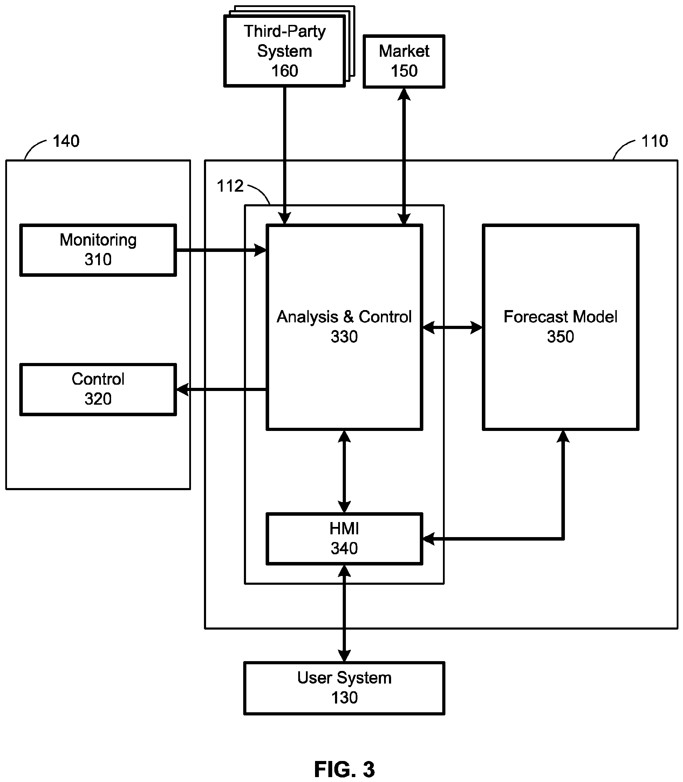

FIG. 3 illustrates an example data flow between a management system 110, a user system 130, a target system 140, a market 150, and one or more third-party systems 160, according to an embodiment. Target system 140 may comprise a monitoring module 310 and a control module 320. Software 112 of management system 110 may comprise an analysis and control module 330, and a human-to-machine interface (HMI) 340. Analysis and control module 330 may interact with or comprise a forecast model 350, which may be stored in database 114 of management system 110. It should be understood that communications between the various systems may be performed via network(s) 120. In addition, communications between a pair of modules may be performed via an application programming interface (API) provided by one of the modules or by other inter-process communication means.

Monitoring module 310 may monitor and collect data that are output by one or more sensors in target system 140 (e.g., sensors in the network of a power system). Monitoring module 310 may also otherwise derive data from the collected data. Monitoring module 310 may transmit or "push" the collected and/or otherwise derived data as system telemetry to analysis and control module 330 (e.g., via an API of analysis and control module 330). Alternatively, analysis and control module 330 may retrieve or "pull" the system telemetry from monitoring module 310 (e.g., via an API of monitoring module 310). The system telemetry may include measurements at each of one or more nodes (e.g., buses within a power system) or other points within a network of target system 140. The system telemetry may be communicated from monitoring module 310 to analysis and control module 330 in real time, as data are collected and/or otherwise derived, or periodically. As used herein, the term "real time" includes events that occur simultaneously, as well as events that are separated in time by ordinary delays resulting from latencies in processing, memory access, communications, and/or the like.

Analysis and control module 330 may receive the system telemetry from monitoring module 310, use the system telemetry in conjunction with system model 350 to determine a configuration for target system 140 (e.g., one or more resources in a power system), and then control target system 140 to transition to the determined configuration. In particular, analysis and control module 330 may generate control signals that are transmitted to control module 320 of target system 140. For example, the control signals may be sent via an API of control module 320. The control signals may be communicated from analysis and control module 330 of management system 110 to control module 320 of target system 140 in real time, as the system telemetry is received and analyzed, periodically (e.g., in advance of a sliding time window), or in response to a user operation. Analysis and control module 330 may control target system 140 automatically (e.g., without any user intervention), semi-automatically (e.g., requiring user approval or confirmation), and/or in response to manual user inputs.

Each third-party system 160 may supply extrinsic data to analysis and control module 330. Third-party system 160 may transmit or push the extrinsic data to analysis and control module 330 (e.g., via an API of analysis and control module 330). Alternatively, analysis and control module 330 may retrieve or pull the extrinsic data from third-party system 160 (e.g., via an API of third-party system 160). The extrinsic data may include any data that are utilized by analysis and control module 330 and that are not available from an intrinsic source, such as monitoring module 310 or database 114. The extrinsic data may comprise or consist of data that are exogenous to target system 140. In the context of target system 140 being a power system and/or market 150 being an energy market, the exogenous data may comprise one or more historical and/or forecast weather parameters, such as temperature, humidity, solar insolation, wind, barometric pressure, precipitation, alerts, and/or the like. In this case, third-party system 160 may comprise a weather service, such as the United States National Weather Service.

Analysis and control module 330 may receive intrinsic data from monitoring module 310 and/or database 114 and/or receive extrinsic data from one or more third-party systems 160, and derive the value of each of one or more covariates from the received intrinsic and/or extrinsic data. The received data may itself comprise the value of a covariate, or the value of a covariate may be otherwise derived (e.g., calculated, inferred, interpolated, imputed, etc.) from the received data. In addition, analysis and control module 330 may receive historical prices for market 150 (e.g., historical energy prices for an energy market) from market 150 and/or database 114. Analysis and control module 330 may input the values of the covariates and historical prices into forecast model 350, which may output forecasted values of a target (e.g., energy price) at a future time. It should be understood that, as used herein, the term "covariate" refers to any variable that can influence the target that is being forecast by forecast model 350.

Based on the forecasted value of the target at the future time, output by forecast model 350, analysis and control module 330 may generate and send a market request to market 150 for the future time. The market request may be an offer to sell an amount of a commodity, such as an offer to supply an amount of electrical power at the future time, or a bid for an amount of a commodity, such as a bid to consume an amount of electrical power at the future time. Market 150 may receive offers and bids from a plurality of participants, including management system 110, match the bids to offers when possible or else reject bids when no match is possible (e.g., automatically or with approval/denial from market operators), and return the market decisions to the respective participants. The participants, including management system 110, may then make decisions and/or perform operations on target system 140, based on the market decisions.

As an example, analysis and control module 330 may utilize the forecasted values of the target at the future times in an optimization algorithm that determines whether it is optimal to sell the commodity at the future times or to buy the commodity at the future times. Based on this determination, analysis and control module 330 may automatically (i.e., without any user involvement), semi-automatically (e.g., with user approval or confirmation via human-to-machine interface 340), or manually (e.g., in response to a manual user request) generate and send a market request to market 150. Subsequently, analysis and control module 330 may receive a market decision on the market request from market 150 and, automatically, semi-automatically, or manually initiate a control operation, to change a real-time or scheduled operation of target system 140, based on the market decision. Initiation of the control operation may comprise transmitting control commands to control module 320 of target system 140, which may responsively control target system 140 according to the control commands.

Control module 320 of target system 140 receives the control signals from analysis and control module 330, and controls one or more components of target system 140 in accordance with the control signals. In the context of a power system, examples of such control include, without limitation, setting a setpoint (e.g., active and/or reactive power for power generators, voltage, etc.), adjusting the power output of a power generator, adjusting the charging or discharging of an energy storage system, adjusting the power input to a load, activating or deactivating a load, closing or opening a switch (e.g., circuit breaker), and/or the like.

As an example, in the context of an energy market, target system 140 may be an electrical system, and the target, forecasted by forecast model 350, may be an energy price. After the value of the energy price is forecasted for a future time, a market request may be generated based on the forecasted value of the energy price at the future time. In the event that the market request comprises a bid to sell energy at the forecasted value of the energy price, the market request may also be based on a generation capacity (e.g., forecasted generation capacity) of the electrical system at the future time. In the event that the market request comprises an offer to buy energy at the forecasted value of the energy price, the market request may also be based on a load (e.g., forecasted load) of the electrical system at the future time. In either case, after generating the market request, the market request may be sent to market 150, and an acceptance or rejection of the market request may be responsively received. Assuming an acceptance of the market request is received, the electrical system may be controlled at the future time to, if the market request comprises a bid, generate power according to the accepted market request, or, if the market request comprises an offer, consume power according to the accepted market request.

Human-to-machine interface 340 may generate a graphical user interface that is transmitted to user system 130 and receive inputs to the graphical user interface via user system 130. The graphical user interface may provide information regarding the current state of target system 140 determined from the system telemetry, a predicted state of target system 140 determined by analysis and control module 330, a configuration of target system 140 determined by analysis and control module 330, a market request, decision, or recommendation for target system 140 determined by analysis and control module 330, a control decision or recommendation for target system 140 determined by analysis and control module 330, and/or the like. In addition, the graphical user interface may provide inputs that enable a user of user system 130 to configure settings of analysis and control module 330, train, configure, test, and/or deploy forecast model 350, generate and/or send market requests to and/or otherwise participate in market 150, accept or reject market requests, decisions, or recommendations, specify, approve, and/or reject controls to be transmitted to control module 320 of target system 140, analyze target system 140, and/or the like.

Forecast model 350 may be stored as a data structure in database 114 and accessed by modules, such as analysis and control module 330, via any known means (e.g., via an API of database 114, a direct query of database 114, etc.). For example, forecast model 350 may be loaded into memory (e.g., 215 and/or 220) from database 114 and executed by management system 110 as a service (e.g., as a microservice) that is accessible to analysis and control module 330 via an API. Management system 110 may provide an individual forecast model 350 for each target system 140 that is managed by management system 110, and/or a collective forecast model 350 that is used for two or more target systems 140.

### 4. Example Architecture

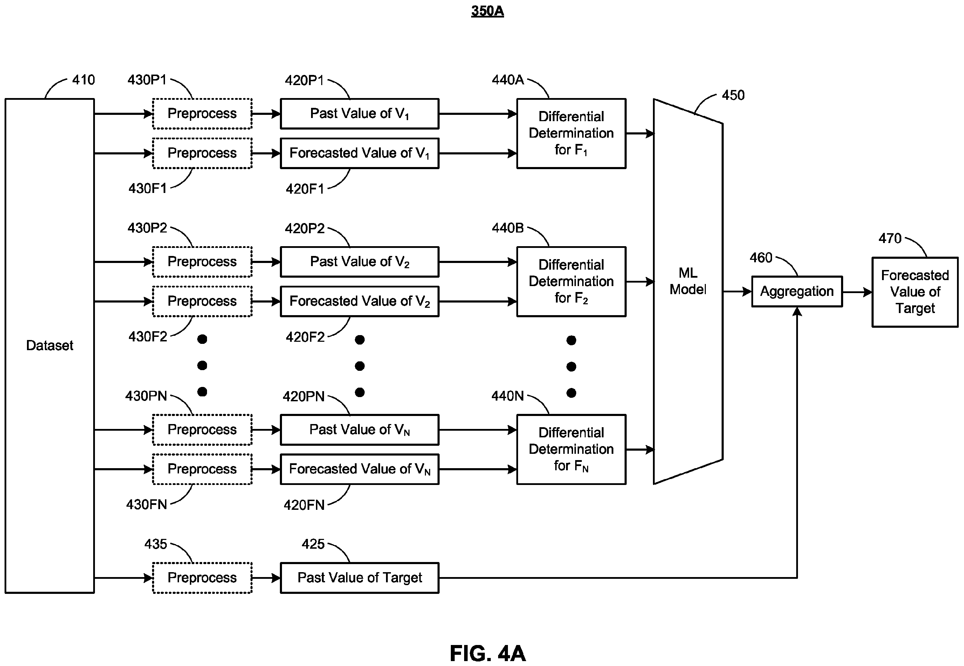

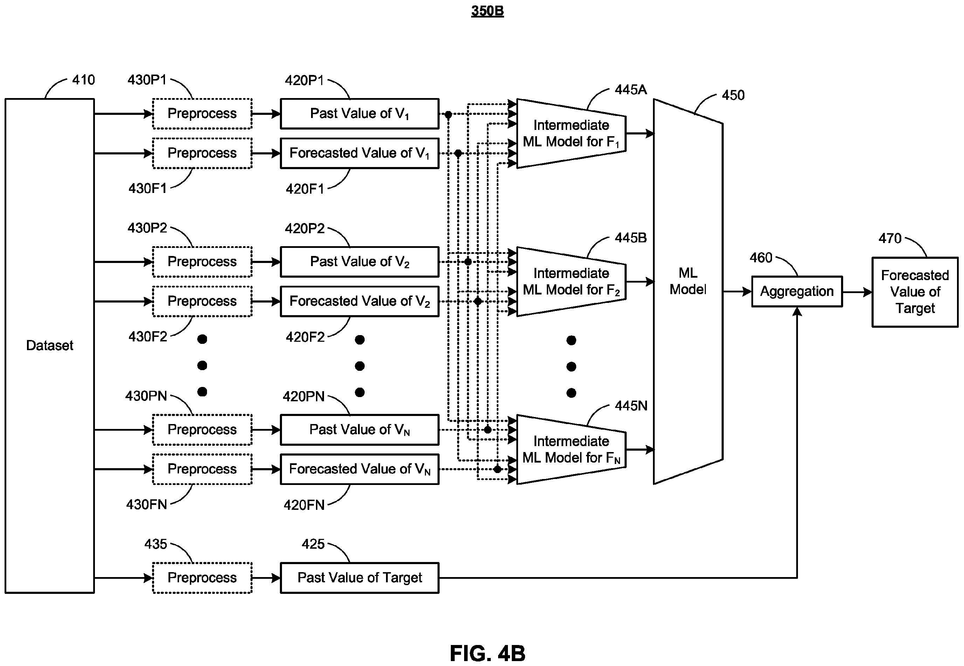

FIGS. 4A and 4B illustrate an example architecture of forecast model 350, according to alternative embodiments. This first embodiment of forecast model 350 will be referred to as forecast model 350A, and the second embodiment of forecast model 350 will be referred to as forecast model 350B. As used herein, a reference numeral without one or more appended characters, but with the same starting numerical component as a reference numeral with the appended character(s), will be used to refer to that component generically. For example, the term "forecast model 350" may refer to either forecast model 350A or 350B, and the term "forecast models 350" may refer collectively to forecast models 350A and 350B.

Forecast model 350 operates on a dataset 410. Dataset 410 may be acquired from an intrinsic data source, such as monitoring module 310 and/or database 114, an extrinsic data source, such as market 150 and/or a third-party system 160, or, in a typical embodiment, from both intrinsic and extrinsic data sources. Dataset 410 may comprise both historical data and forecast data for a plurality of parameters related to target system(s) 140. It should be understood that, even though dataset 410 is illustrated as one data structure, dataset 410 may, in practice, comprise a plurality of different data structures (e.g., representing different parameters, different data sources, etc.).

One or more variables (V) may be extracted from dataset 410 for utilization within forecast model 350. Forecast model 350 may utilize any number of variables, including one, two, three, four, five, tens, hundreds, thousands, millions, billions, or any other plurality of variables. Each variable may be a covariate of the target to be forecasted by forecast model 350.

Each variable in dataset 410 may have both a past value 420P and a forecasted value 420F. For example, variable V₁ has a past value 420P1 and a forecasted value 420F1, variable V₂ has a past value 420P2 and a forecasted value 420F2, and so on and so forth, including a variable V_{N} which has a past value 420PN and a forecasted value 420FN. Again, N may be any integer greater than or equal to one. Past value 420P of each variable may be determined from historical data for that variable within dataset 410. Forecasted value 420F of each variable may be determined from forecast data for that variable within dataset 410. Forecasted value 420F for a variable may be determined using any means that is suitable for that particular variable. For example, variables that are related to weather (e.g., temperature, humidity, solar insolation, wind, barometric pressure, precipitation, etc.) may be forecasted using well-known meteorological methods. One or more of forecasted values 420F may be predicted using a machine-learning model, including potentially a forecast model that has a similar or identical architecture to forecast model 350.

It should be understood that each past value 420P represents a value of the respective variable at a past time, and each forecasted value 420F represents a value of the respective variable at a future time. In a particular execution of forecast model 350, the past time for each past value 420P of every variable will be the same, and the future time for each forecasted value 420F of every variable will also be the same. Thus, there is a past value 420P for every variable at the same past time, and a forecasted value 420F for every variable at the same future time.

In an embodiment in which forecast model 350 executes in real time, the past time may represent the most recent time at which historical values of the variables are available. In this case, the past time may essentially be the current time, but delayed by ordinary latencies in processing, memory access, communications, and/or the like. Thus, it should be understood that the term "past time" may refer to a time that is far in the past (e.g., months, weeks, days, etc.), a time in the recent past (e.g., hours, minutes, etc.), or a time that is essentially current (e.g., seconds, tenths of seconds, hundredths of seconds, milliseconds, microseconds, nanoseconds, picoseconds, femtoseconds, etc.).

The past time may be defined as a predefined time interval preceding the future time, the future time may be defined as a predefined time interval following the past time, or the past time may be defined as a first predefined time interval preceding the current time while the future time is defined as a second predefined time interval following the current time. For the sake of simplicity, it will be assumed that the future time is defined as a predefined time interval following the past time. In other words, *future time* = *past time* + *predefined time interval.* The predefined time interval may be set to any suitable amount of time, depending on one or more factors, such as the availability or frequency of historical and forecast data, the target to be forecasted, how far into the future the target is to be forecasted, the rate at which the relevance of the past values 420P of the variables diminishes over time, and/or the like. It should be understood that the past time and the future time define a time window having a length equal to the predefined time interval.

Forecast model 350 may also utilize a past value 425 of the target to be forecasted. In a particular execution of forecast model 350, past value 425 represents a value of the target at the same past time as past value 420P of each variable. Again, the past time may essentially be the current time, but delayed by ordinary latencies in processing, memory access, communications, and/or the like. Past value 425 of the target may be acquired from an intrinsic data source, such as monitoring module 310 and/or database 114, or an extrinsic data source, such as market 150 or a third-party system 160. For example, in an embodiment in which the target is an energy price, past value 425 of the target may be acquired from market 150, which may be an energy market.

In an optional embodiment, values of one or more variables, including any subset and potentially all of the variables, may be derived from dataset 420 via one or more preprocesses 430. In particular, past value 420P of one or more variables may be derived via a preprocess 430P and/or forecasted value 420F of one or more variables may be derived via a preprocess 430F. For example, past value 420P1 is derived via preprocess 430P1 and future value 420F1 is derived via preprocess 430F1, past value 420P2 is derived via preprocess 430P2 and future value 420F2 is derived via preprocess 430F2, and past value 420PN is derived via preprocess 430PN and future value 420FN is derived via preprocess 430FN. Preprocesses 430 for past value 420P and future value 420F of the same variable may be identical. For example, preprocess 430P1 may be identical to preprocess 430F1, preprocess 430P2 may be identical to preprocess 430F2, and/or preprocess 430PN may be identical to preprocess 430FN. Alternatively, different preprocesses 430 may be used for past value 420P and future value 420F of the same variable. Preprocesses 430 for different variables may be identical or different, depending on the particular variables. It should be understood that past value 420P and/or future value 420F of some variables may be derived from dataset 410 via preprocesses 430, whereas past value 420P and/or future value 420F of other variables may be extracted directly from dataset 410, without any preprocessing, if already available in a useable form. In an alternative embodiment, preprocesses 430 may be omitted, such that past value 420P and future value 420F of every variable is extracted directly from dataset 410.

In an optional embodiment, similarly to past values 420P, past value 425 of the target may be derived from dataset 410 via a preprocess 435. In an alternative embodiment, preprocess 435 may be omitted, such that past value 425 of the target is extracted directly from dataset 410.

Each preprocess 430 may receive raw data from dataset 410 as input, process the raw data in some manner to produce the respective past value 420P or forecasted value 420F of the variable, and output the respective past value 420P or forecasted value 420F of the variable. Similarly, preprocess 435 may receive raw data from dataset 410 as input, process the raw data in some manner to produce past value 425 of the target, and output past value 425 of the target. In any case, the processing may comprise standardizing or normalizing a parameter in dataset 410 into the respective output value (e.g., converting the value of the variable into a standard unit of measure, resampling a time series of parameters into the value of the variable, etc.), calculating the respective output value based on one or a plurality of parameters in dataset 410 (e.g., calculating the value of the variable by inputting values of one or more parameters into an equation, algorithm, or machine-learning model, interpolating or imputing the value from a set of values of a parameter, etc.), and/or the like. Preprocess 430 and/or 435 may be useful when values of the respective variable or target exhibit random fluctuations (e.g., spikes) or when feature engineering is carried out from raw, unprocessed data.

In forecast model 350A, each pair of past value 420P and forecasted value 420F of a variable are input into a differential determination 440 for a particular feature F of a machine-learning model 450. In this first embodiment, each feature may be a respective one of the variables. For example, feature F₁ may be the same as variable V₁, feature F₂ may be the same as variable V₂, and feature F_{N} may be the same as variable V_{N}. In this case, each differential determination 440 may comprise calculating the difference between past value 420P and forecasted value 420F for a given variable, for example, by subtracting forecasted value 420F from past value 420P for the variable or vice versa. It should be understood that the calculated difference represents a forecasted or predicted change (e.g., increase/positive, decrease/negative, or no change) in the value of the given variable from the past time to the future time.

Alternatively, in forecast model 350B, a pair of past value 420P and forecasted value 420F of a variable are input into an intermediate machine-learning model 445 for a particular feature F of machine-learning model 450. This second embodiment differs from the first embodiment in that a single feature F may correspond to one or a plurality of variables that are related to that feature F. Each intermediate machine-learning model 445 may be trained to predict a difference between the past value (i.e., at the past time) and forecasted value (i.e., at the future time) of a feature based on one or more variables related to that feature. For example, intermediate machine-learning model 445A may predict the difference between the past and forecasted values of feature F₁ from any set of past values 420P and forecasted values 420F of variables V₁, V₂, ..., and/or V_{N}, intermediate machine-learning model 445B may predict the difference between the past and forecasted values of feature F₂ from any set of past values 420P and forecasted values 420F of variables V₁, V₂, ..., and/or V_{N}, and so on and so forth, including intermediate machine-learning model 445N predicting the difference between the past and forecasted values of feature F_{N} from any set of past values 420P and forecasted values 420F of variables V₁, V₂, ..., and/or V_{N}. It should be understood that the difference between past and forecasted values for one feature (e.g., F₁) may be calculated from a different subset of variables than for another feature (e.g., F₂). The subset of one or more variables, related to one feature, may overlap with the subset of one or more variables related to at least one other feature, or alternatively may not overlap with the subset of one or more variables related to any other feature.

Each intermediate machine-learning model 445 may comprise any machine-learning algorithm that is capable of predicting a change in the value of a feature based on tabular data. Tabular data are any data that can be represented in a table with one or more rows and one or more columns. Examples of such a machine-learning algorithm include, without limitation, a random forest algorithm, a gradient-boosting algorithm, a regression algorithm, a support vector machine, an artificial neural network (e.g., convolutional neural network (CNN), recurrent neural network (RNN), deep-learning neural network, etc.), and the like. An intermediate machine-learning model 445 could also comprise an ensemble that includes a plurality of different such machine-learning algorithms. An intermediate machine-learning model 445 (e.g., 445A) for one feature (e.g., F₁) may be the same as or different than an intermediate machine-learning model 445 (e.g., 445B) for a different feature (e.g., F₂), in terms of the set of algorithm(s), hyperparameters, training, and/or the like.

In a hybrid of the first and second embodiments, the difference between past and forecasted values of one or more features (e.g., F₁) may be determined using differential determination 440, while the difference between past and forecasted values of one or more other features (e.g., F₂) may be determined using an intermediate machine-learning model 445. The utilization of an intermediate machine-learning model 445, to determine the difference between past and forecasted values for a feature, may be preferred over the utilization of a differential determination 440 when a feature does not precisely correspond to any variable that is derivable from dataset 410 in a straightforward manner.

Forecast models 350A and 350B are both two-stage architectures in which one layer of differential determinations 440 and/or intermediate machine-learning models 445 feeds inputs to machine-learning model 450. In an alternative embodiment, there may be three or more stages. In other words, a first layer of differential determinations 440 and/or intermediate machine-learning models 445 may feed a second layer of differential determinations 440 and/or intermediate machine-learning models 445, which may optionally feed a third layer of differential determinations 440 and/or intermediate machine-learning models 445, and so on and so forth, with a final layer of differential determinations 440 and/or intermediate machine-learning models 445 feeding machine-learning model 450. Preprocesses 430 may be added between layers if needed. Notably, not all layers need to have the same number of differential determinations 440 and/or intermediate machine-learning models 445, since two or more differential determinations 440 and/or intermediate machine-learning models 445 in a preceding layer may feed one differential determination 440 or intermediate machine-learning model 445 in a subsequent later. This stacking of layers into a stacked architecture enables forecast model 350 to learn complex features and forecast complex targets. The stacked approach can be especially useful when intermediate variables are not available in dataset 410 and/or to learn the effect of exogenous variables on the target. As one example, past value 420P and forecasted value 420F for load, which is used as a variable (e.g., in a differential determination 440 or intermediate machine-learning model 445) in a second layer, may be determined from past value 420P and forecasted value 420F of a weather-related variable (e.g., temperature) by an intermediate machine-learning model 445 in a first layer.

Regardless of whether the first embodiment, second embodiment, or a hybrid embodiment of forecast model 350 is used, the output of the final layer of differential determination(s) 440 and/or intermediate machine-learning model(s) 445 comprises a difference between a past value and forecasted value of each of a plurality of features. In other words, for each of a plurality of features, forecast model 350 determines a difference between a past value of the feature at the past time and a forecasted value of the feature at the future time. These differences are input to machine-learning model 450. Notably, it is the determined differences in the values of the features between the past and future times - as opposed to the values of the features themselves - that are input to machine-learning model 450.

Machine-learning model 450 is trained to predict differential information based on the differences, determined for the plurality of features by the final layer of differential determination(s) 440 and/or intermediate machine-learning model(s) 445. The differential information may comprise a predicted change in the value of the target. Alternatively, the differential information may comprise a probability distribution of a predicted change in the value of the target. In this case, the probability distribution comprises a mathematical function that, for each point within a range of possible values of the change in target, defines the probability that the actual change in the value of the target will match that point in the range of possible values. In either case, it should be understood that the change in the value of the target represents a predicted change of the value of the target from the same past time, for which past values 420P and 425 are acquired, to the same future time for which future values 420F are forecast.

Machine-learning model 450 may comprise any machine-learning algorithm that is capable of predicting the value of a target based on tabular data. Again, examples of such a machine-learning algorithm include, without limitation, a random forest algorithm, a gradient-boosting algorithm, a regression algorithm, a support vector machine, an artificial neural network, and the like. Machine-learning model 450 could also comprise an ensemble that includes a plurality of different such machine-learning algorithms. Machine-learning model 450 may comprise the same machine-learning algorithm(s) as intermediate machine-learning model(s) 445 or may comprise different machine-learning algorithm(s) than one or more intermediate machine-learning models 445.

Forecast model 350 forecasts the value of the target based on the differential information that was output by machine-learning model 450. In particular, the differential information is aggregated, by aggregation 460, with past value 425 of the target at the past time to produce forecasted value 470 of the target at the future time. Forecasted value 470 of the target is the output of forecast model 350.

In an embodiment in which the differential information comprises the predicted change in the value of the target, aggregation 460 may comprise adding the predicted change in the value of the target to past value 425 of the target. In other words, forecasted value 470 of target is the sum of past value 425 of target and the predicted change in the value of the target. In this case, forecasted value 470 will be a single value representing a forecast of the target, in absolute terms, at the future time.

In an alternative embodiment in which the differential information comprises a probability distribution of the predicted change in the value of the target, aggregation 460 may comprise summing the probability distribution with the past value 425 of the target. In other words, the range of possible values of the change in the target in the probability distribution is converted into a range of possible values of the target itself in absolute terms. The only thing that will change in the probability distribution is that each point will represent a value of the target (i.e., a sum of the past value 425 of the target and the change in the value of the target represented by that point in the original probability distribution), instead of the change in the value of the target. The probability at each point will not change. In this case, forecasted value 470 of the target will comprise a probability distribution for the future time.

To reiterate a problem with state of the art, conventional forecast models assume that the underlying data are stationary. However, the data are often non-stationary, such that the statistical properties of the operational data do not match the statistical properties of the training data. This discrepancy can be due to long-term trends, seasonal patterns or other periodicities, and/or the like in the underlying system. In the case of non-stationary data, the conventional forecast model must be increased in complexity, or otherwise, must be frequently retrained.

In contrast, forecast model 350 accounts for non-stationary data, without increased complexity and without an increase in the frequency of retraining, by recasting the forecasting problem as a matter of tracking differentials in the data. In particular, variables (e.g., covariates) are passed through one or more layers of differential determinations 440 and/or intermediate machine-learning models 445 to determine differences in past and forecasted values of a plurality of features. These differences are then input into a machine-learning model 450 to predict a change in the value of the target, which is aggregated with a past value 425 of the target to produce a forecasted value 470 of the target.

In other words, forecast model 350 forecasts the target based on changes in covariates, as opposed to the values of the covariates themselves. This differential approach does not require machine-learning model 450 to have the complexity that is required to characterize long-term trends and periodicities in non-stationary data, since, assuming a relatively short time window, the impacts of long-term trends and periodicities are negligible. In addition, this differential approach enables forecast model 350 to remain accurate despite the long-term trends and periodicities, such that frequent retraining is not required. In the context of energy prices, the differential approach may address long-term trends or periodicities such as impacts of inflation, weather changes, long-term rises in temperature, and the like, on the energy prices, without having to explicitly model those long-term trends and periodicities.

### 5. Forecast Model

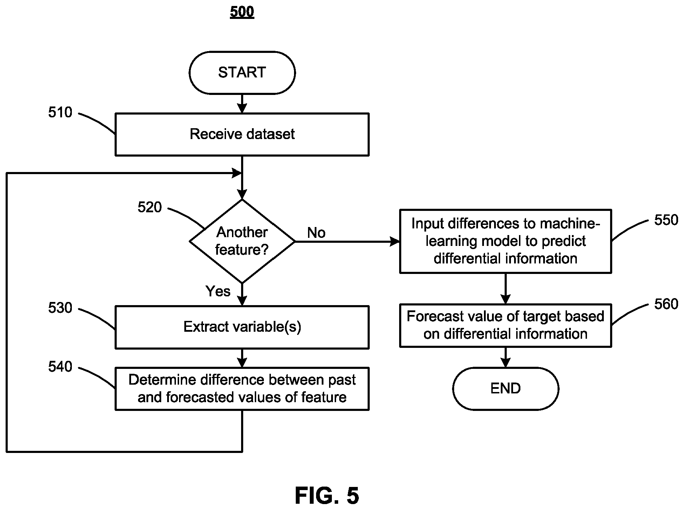

FIG. 5 illustrates an example process 500 for executing forecast model 350, according to an embodiment. In particular, process 500 represents one execution of forecast model 350 to generate forecasted value 470 of the target for one future time point. Process 500 may be implemented by software 112. While process 500 is illustrated with a certain arrangement and ordering of subprocesses, process 500 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

In subprocess 510, dataset 410 is received. As discussed elsewhere herein, dataset 410 may comprise historical and/or forecast data from one or more intrinsic and/or extrinsic data sources. In particular, dataset 410 may comprise historical data for at least the past time to be considered, and/or forecast data for the future time for which the value of the target is to be forecasted.

In subprocess 520, it is determined whether or not another feature remains to be considered. It should be understood that the set of features F to be considered may be fixed across all executions of process 500. Thus, the same fixed set of features will be considered in each execution of process 500. Accordingly, subprocess 520 may involve determining whether or not every feature in the fixed set of features has been considered. When another feature remains to be considered (i.e., "Yes" in subprocess 520), process 500 selects a feature and performs an iteration of subprocesses 530-540 for the selected feature. It should be understood that iterations of subprocess 530-540 may be performed in parallel or serially for a plurality of the features. On the other hand, when no more features remain to be considered (i.e., "No" in subprocess 520), process 500 proceeds to subprocess 550.

In subprocess 530, one or more variables related to the feature under consideration are extracted from dataset 410 received in subprocess 510. As discussed elsewhere, each variable may be a covariate of the target being forecasted. In the embodiment of forecast model 350A, a single variable may be extracted (e.g., directly or via a preprocess 430). In the embodiment of forecast model 350B, one or more variables may be extracted (e.g., directly or via a preprocess 430). For each variable, both a past value 420P and a forecasted value 420F of the variable may be extracted (e.g., directly, or via the same preprocess 430 or separate preprocesses 430).

In subprocess 540, the difference between past and forecasted values for the feature under consideration is determined. In the embodiment of forecast model 350A, this difference may be calculated by differential determination 440. For example, the difference may be calculated by subtracting forecasted value 420F of the extracted variable from past value 420P of the extracted variable, or vice versa. In the embodiment of forecast model 350B, the difference may be calculated by inputting past value 420P and forecasted value 420F of each of the extracted variable(s) into an intermediate machine-learning model 445 to predict the difference between the past and forecasted values of the feature under consideration. As discussed elsewhere herein, subprocess 540 may comprise passing the extracted variables through one or a plurality of layers of differential determination(s) 440 and/or intermediate machine-learning model(s) 445 to determine the difference in past and future values for the features.

In subprocess 550, all of the differences, between the past and forecasted values for all of the features, as determined in iterations of subprocesses 530-540, are input to machine-learning model 450 to predict the differential information. As discussed elsewhere herein, the differential information may comprise a predicted change in the value of the target from the past time to the future time under consideration, or a probability distribution of the predicted change in the value of the target from the past time to the future time under consideration, depending on which type of differential information machine-learning model 450 was trained to output.

In subprocess 560, the value of the target at the future time is forecasted based on the differential information output by machine-learning model 450 in subprocess 550. In particular, forecasted value 470 may be calculated by aggregating the differential information with past value 425 of the target via aggregation 460. For example, past value 425 of the target may be added to the predicted change in value of the target or the probability distribution of the predicted change in value of the target, as output by machine-learning model 450. Forecasted value 470 of the target, which may be either a single value or a probability distribution, depending on the implementation, is output by forecast model 450.

### 6. Training

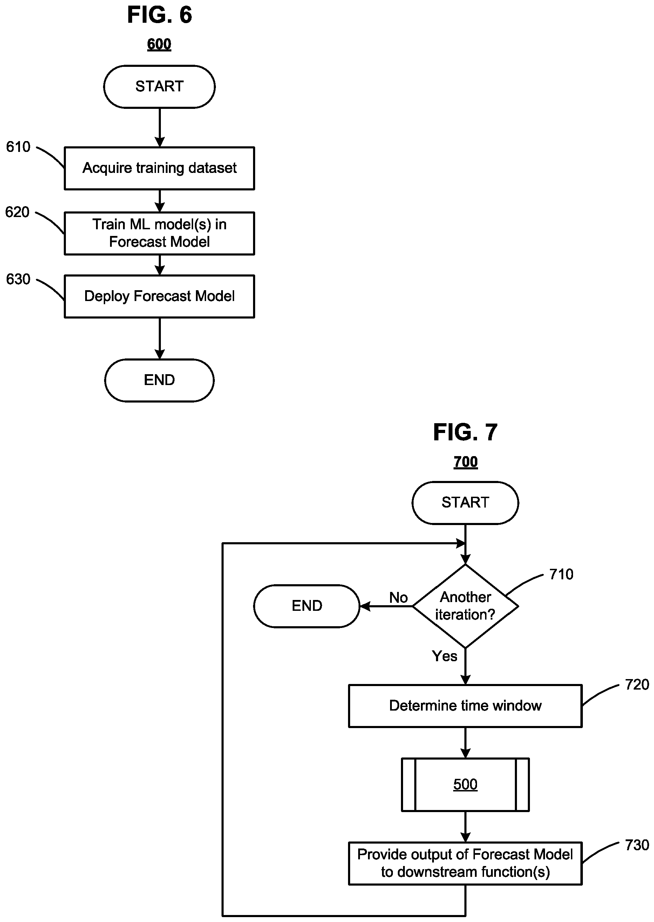

FIG. 6 illustrates a training process 600, which trains forecast model 350 in a training phase, according to an embodiment. Training process 600 may be implemented by software 112. While training process 600 is illustrated with a certain arrangement and ordering of subprocesses, training process 600 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

In subprocess 610, a training dataset is acquired. The training dataset may comprise a plurality of records. Each of the plurality of records may comprise a feature vector that is labeled with a true value of the change in value of the target. The feature vector may comprise, for each of the plurality of features F, the historical difference between a past and forecasted value for that feature. It should be understood that, in this training phase, the forecasted value is a historical forecasted value. In other words, the forecasted value is a value that was forecasted for the respective feature for a time that was in the future at the time of forecasting, but which is now in the past. Thus, the true value of the target is now known. Accordingly, each feature vector can be labeled with the known true value of the change in value of the target, which resulted after the predefined time interval from the past time of the past values of the features represented in the feature vector.

In subprocess 620, the machine-learning model(s) in forecast model 350 are trained using the training dataset, for example, in one or more supervised learning sessions. In the first embodiment of forecast model 350A, machine-learning model 450 may be trained in subprocess 620. In the second embodiment of forecast model 350B or a hybrid embodiment, each intermediate machine-learning model 445 and machine-learning model 450 may be trained in subprocess 620. In this case, intermediate machine-learning model(s) 445 and machine-learning model may be trained individually in separate training sessions, or collectively in the same training session. As discussed elsewhere herein, each intermediate machine-learning model 445 and machine-learning model 450 may comprise any machine-learning algorithm(s) that are capable of predicting the value of a target based on tabular data, such as a random forest algorithm, a gradient-boosting algorithm, a regression algorithm, a support vector machine, an artificial neural network, or the like. Each machine-learning algorithm may be trained, in any suitable manner, so as to minimize an error, according to a suitable loss function (e.g., a quantile loss function if the differential information comprises a probability distribution), between the values output by the machine-learning algorithm for a feature vector and the true value with which that feature vector is labeled. For example, for each feature vector in the training dataset, forecast model 350 (or machine-learning model 450) may be executed according to process 500, and an error, between the resulting output and the true value of the target with which the feature vector is labeled, may be calculated according to the loss function. Subprocess 620 may also comprise validating and testing a performance metric of each machine-learning algorithm after training, as well as potentially retraining the machine-learning algorithm until a sufficient performance metric is achieved.

In subprocess 630, the trained forecast model 350 is deployed. For instance, forecast model 350 may be deployed from a training or development environment to an operating or production environment. As an example, forecast model 350 may be deployed with an application programming interface that is accessible to other services executing on management system 110 (e.g., in a microservices architecture), such as analysis and control module 330. Alternatively, forecast model 350 may be integrated into analysis and control module 330 and/or stored in database 114.

### 7. Operation

FIG. 7 illustrates an operating process 700, which utilizes forecast model 350 in an operating phase, according to an embodiment. Operating process 700 may be implemented by software 112. While operating process 700 is illustrated with a certain arrangement and ordering of subprocesses, operating process 700 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

In subprocess 710, it is determined whether or not to perform another iteration. While operating process 700 could consist of a single iteration, it is generally contemplated that operating process 700 would comprise a plurality of iterations. The iterations may be performed continuously or periodically, for example, according to a time step (e.g., after each expiration of a time interval). In addition, the iterations may be performed indefinitely or for a finite time frame. It should be understood that two or more iterations may be performed serially or in parallel. When another iteration is to be performed (i.e., "Yes" in subprocess 710), operating process 700 performs an iteration of subprocesses 720-730. Otherwise, when no more iterations are to be performed (i.e., "No" in subprocess 710), operating process 700 may end.

It should be understood that, in each iteration, a time window is defined by the past time, at which the values of the variables to be used for forecasting have been acquired, and the future time at which the value of the target is to be forecasted. Over each successive iteration, the time window may slide by the time step. The time step may be any amount of time. However, it should be understood that, as the length of the time step decreases, the resolution of the forecasting increases. Thus, it is generally preferable to have a small time step, such as a minute, second, tenth of a second, hundredth of a second, millisecond, or the like. Notably, the time step will generally be dictated by the frequency or sampling rate at which new datasets 410 become available.

It should be understood that the past time and future time will slide with the time window, according to the time step. The future time will be a fixed length of time after the current time. In an embodiment in which iterations are performed in real time (e.g., as new datasets 410 are acquired), this fixed length of time will equal the predefined time interval between the past and future times. In other embodiments, this fixed length of time may be shorter than the predefined time interval between the past and future times.

The fixed length of time into the future, at which the target is forecasted, may be set to any desired length. For example, for day-ahead forecasting, the future time considered in each iteration may be twenty-four hours into the future. It should be understood that this is just one example. Other examples of the fixed length of time include one month, one week, fortyeight hours, twelve hours, one hour, half an hour, fifteen minutes, ten minutes, five minutes, one minute, one second, or the like.

In subprocess 720, the time window is determined. For example, in the first iteration, the time window may be determined by setting the future time equal to the time point that is the fixed length of time in the future. Then, the past time may be set to the time point that is the predefined time interval before the future time. In each subsequent iteration, the time window may be redetermined in this manner or simply incremented by the time step. For example, the past time and the future time may be incremented by the time step.

Next, an iteration of process 500 is executed, as discussed elsewhere herein. The output of process 500 is the output of forecast model 350, which is forecasted value 470 of the target at the future time. Forecasted value 470 may be a single value of the target or a probability distribution of values for the target.

In subprocess 730, the output of forecast model 350 may be provided to one or more downstream functions. For example, forecasted value 470 of the target may be provided to analysis and control module 330, which may use forecasted value 470 to generate a market request (e.g., offer or bid) for market 150 for the future time. It should be understood that, over a plurality of iterations, a set of forecasted values 470 of the target will be output for a plurality of time points, with adj acent time points separated by the time step. The plurality of time points form a future time series that may be divided into one or more future time frames. The future time frame may have any length, including one or more seconds, one or more minutes, one or more hours, one or more days, or the like. In an embodiment, this time series or time frame of forecasted values 470 of the target, as opposed to forecasted value 470 of the target at a single future time point, is used to generate the market request or as an input to other downstream function(s).

### 8. Example Application and Implementation

In an embodiment, market 150 is an energy market, and forecast model 350 is used to forecast energy and/or ancillary prices in the energy market. In this case, the target is an energy price (e.g., price per unit of energy at a future time point, either as a singular value or a probability distribution), and the plurality of features is associated with an electrical system as target system 140. For example, the plurality of features may comprise one or more parameters of weather in an environment of the electrical system, one or more parameters of electrical load in the electrical system, and/or the like.

It should be understood that embodiments of forecast model 350 may be used in other applications, besides energy or other markets 150. In other words, forecast model 350 may be used to forecast a target that is not used for market requests. For instance, forecast model 350 may be used to forecast load or demand within an electrical system, power generation in an electrical system, or any other electrical parameter (e.g., voltage, current, etc.). Forecast model 350 may also be used to forecast targets in non-electrical contexts, such as a weather parameter (e.g., temperature, humidity, solar insolation, wind, barometric pressure, precipitation, etc.).

An implementation of forecast model 350 to forecast day-ahead energy prices for energy markets was trained and validated on U.S. midcontinental and Australian energy markets. In this implementation, a gradient-boosting algorithm was used for machine-learning models 445 and 450. In particular, the eXtreme Gradient Boosting (XGBoost) algorithm was used as the gradient-boosting algorithm. XGBoost is described, for example, in T. Chen et al., "XGBoost: A Scalable Tree Boosting System," Proceedings of the 22nd Association for Computing Machinery (ACM) Special Interest Group on Knowledge Discovery and Data Mining (SIGKDD) International Conference on Knowledge Discovery and Data Mining, Aug. 2016, pp. 785-794, arXiv:1603.02754, which is hereby incorporated herein by reference as if set forth in full. In the implementation, a two-stage architecture was used in which forecast model 350 comprised an intermediate machine-learning model 445 that was trained to predict a change in zonal load of the electrical system, and a machine-learning model 450 that was trained to forecast the differential information based on the predicted change in zonal load. This implementation of forecast model 350 was compared to a baseline that used the same covariates to forecast day-ahead energy prices.

Relative to the baseline, the implementation of forecast model 350 for the U.S. midcontinental energy market achieved a 23% improvement in terms of the root mean squared error (RMSE), and the implementation of forecast model 350 for the Australian energy market achieved a 21% improvement in terms of the root mean squared error. For test data, representing three months of values of the variables and target, forecast model 350 captured approximately 94% of actual energy prices within 99% of the forecasted probabilistic interval. The table below depicts the performance of the implementations of forecast model 350, relative to other models, in terms of RMSE and mean absolute percentage error (MAPE) or mean absolute error (MAE):

| U.S. Midcontinental Energy Market Prices | | |
|---|---|---|
| Model | RMSE | MAPE |
| Forecast Model 350 | 5.8 | 8.3% |
| Neural Prophet | 8.0 | 10.6% |
| Gradient Boosting | 8.9 | 12% |
| Sparse Variational Gaussian Process | 14.1 | 18% |
| Neural Network | 7.6 | 12% |

| Australian Energy Market Prices | | |
|---|---|---|
| Model | RMSE | MAE |
| Forecast Model 350 | 169 | 94 |
| Neural Prophet | 193 | 107 |
| Temporal Convolutional Network | 184 | 127 |
| PostgresML Model | 214 | 149 |

### 9. Example Embodiments

Disclosed embodiments may provide numerous advantages over the state of the art. A first objective achievable by disclosed embodiments is the elimination of the need for a complex machine-learning model that explicitly characterizes trends and/or periodicities in the features and target, without sacrificing performance. A second objective achievable by disclosed embodiments is a reduction in the frequency at which the machine-learning model must be retrained in order to maintain accuracy in the operational phase. A third objective achievable by disclosed embodiments is increased flexibility in feature engineering. A fourth objective achievable by disclosed embodiments is an improvement in market forecasts, which improves market efficiency. To address one or more of these objectives, example embodiments include, without limitation:
Embodiment 1: A method comprising using at least one hardware processor to, in each of one or more iterations: for each of a plurality of features, determine a difference between a past value of the feature at a past time and a forecasted value of the feature at a future time; input the differences, determined for the plurality of features, to a machine-learning model that has been trained to predict differential information based on the differences determined for the plurality of features; and forecast a value of a target at the future time based on the differential information. This embodiment addresses at least the first, second, and/or fourth objectives.
Embodiment 2: The method of Embodiment 1, wherein forecasting the value of the target based on the differential information comprises aggregating the differential information with a past value of the target at the past time. This embodiment addresses at least the first, second, and/or fourth objectives.
Embodiment 3: The method of Embodiment 2, further comprising using the at least one hardware processor to: receive a dataset comprising historical data; and in each of the one or more iterations, preprocess the dataset to derive the past value of the target. This embodiment addresses at least the third objective.
Embodiment 4: The method of any preceding Embodiment, further comprising using the at least one hardware processor to: receive a dataset comprising historical and forecasted data; and in each of the one or more iterations, preprocess the dataset to derive the past value and the forecasted value for each of the plurality of features. This embodiment addresses at least the third objective.
Embodiment 5: The method of any preceding Embodiment, wherein the differential information comprises a predicted change in the value of the target. This embodiment addresses at least the first, second, and/or fourth objectives.
Embodiment 6: The method of Embodiment 5, wherein forecasting the value of the target based on the differential information comprises adding the predicted change in the value of the target to a past value of the target at the past time. This embodiment addresses at least the first, second, and/or fourth objectives.
Embodiment 7: The method of any preceding Embodiment, wherein the differential information comprises a probability distribution of a predicted change in the value of the target. This embodiment addresses at least the first, second, and/or fourth objectives.
Embodiment 8: The method of Embodiment 7, wherein forecasting the value of the target based on the differential information comprises aggregating the probability distribution with a past value of the target at the past time. This embodiment addresses at least the first, second, and/or fourth objectives.
Embodiment 9: The method of any preceding Embodiment, wherein, for each of at least one of the plurality of features, determining the difference between the past value and the forecasted value of the at least one feature comprises: receiving one or more variables related to the at least one feature; and inputting the one or more variables to an intermediate machine-learning model that has been trained to predict a difference between the past value and the forecasted value of the at least one feature based on the one or more variables. This embodiment addresses at least the third objective.
Embodiment 10: The method of Embodiment 9, wherein the at least one feature is two or more of the plurality of features. This embodiment addresses at least the third objective.
Embodiment 11: The method of Embodiment 10, wherein the one or more variables related to one of the two or more features overlap with the one or more variables related to at least one other one of the two or more features. This embodiment addresses at least the third objective.
Embodiment 12: The method of either one of Embodiments 10 or 11, wherein, for a first one of the two or more features, the one or more variables related to that first feature are input to a first intermediate machine-learning model to determine the difference between the past and forecasted values for the first feature, wherein, for a second one of the two or more features, the one or more variables related to that second feature are input to a second intermediate machine-learning model to determine the difference between the past and forecasted values for the second feature, and wherein the first intermediate machine-learning model is different from the second intermediate machine-learning model. This embodiment addresses at least the third objective.
Embodiment 13: The method of any preceding Embodiment, wherein the one or more iterations are a plurality of iterations, and wherein the past time is successively incremented in each of the plurality of iterations, such that the value of the target is forecasted for each of a plurality of time points spanning a time frame. This embodiment addresses at least the fourth objective.
Embodiment 14: The method of Embodiment 13, wherein the time frame is one or more hours in length. This embodiment addresses at least the fourth objective.
Embodiment 15: The method of any preceding Embodiment, wherein the target comprises an energy price, and wherein the plurality of features is associated with an electrical system. This embodiment addresses at least the fourth objective.
Embodiment 16: The method of Embodiment 15, wherein the plurality of features comprises one or more parameters of weather in an environment of the electrical system. This embodiment addresses at least the fourth objective.
Embodiment 17: The method of either one of Embodiments 15 or 16, wherein the plurality of features comprises one or more parameters of electrical load in the electrical system. This embodiment addresses at least the fourth objective.
Embodiment 18: The method of either one of Embodiments 15 through 17, further comprising using the at least one hardware processor to, after forecasting the value of the energy price at the future time, generate a market request based on the forecasted value of the energy price at the future time, and, when the market request comprises a bid to sell energy at the forecasted value of the energy price, further based on a generation capacity of the electrical system at the future time, or, when the market request comprises an offer to sell energy at the forecasted value of the energy price, further based on a load of the electrical system at the future time.
Embodiment 19: The method of Embodiment 18, further comprising using the at least one hardware processor to, after generating the market request: send the market request to an energy market; receive an acceptance of the market request; and at the future time, control the electrical system to, when the market request comprises a bid, generate power according to the accepted market request, or, when the market request comprises an offer, consume power according to the accepted market request.
Embodiment 20: The method of any preceding Embodiment, wherein the machine-learning model comprises a random forest algorithm, a gradient-boosting algorithm, a regression algorithm, a support vector machine, or an artificial neural network. This embodiment addresses at least the first, second, and/or fourth objectives.
Embodiment 21: A system comprising: at least one hardware processor; and software configured to, when executed by the at least one hardware processor, perform the method of any one of Embodiments 1 through 20.
Embodiment 22: A non-transitory computer-readable medium having instructions stored thereon, wherein the instructions, when executed by a processor, cause the processor to perform the method of any one of Embodiments 1 through 20.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

As used herein, the terms "comprising," "comprise," and "comprises" are openended. For instance, "A comprises B" means that A may include either: (i) only B; or (ii) B in combination with one or a plurality, and potentially any number, of other components. In contrast, the terms "consisting of," "consist of," and "consists of" are closed-ended. For instance, "A consists of B" means that A only includes B with no other component in the same context.

Combinations, described herein, such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

## Claims

1. A method comprising using at least one hardware processor to, in each of one or more iterations:
for each of a plurality of features, determine a difference between a past value of the feature at a past time and a forecasted value of the feature at a future time;
input the differences, determined for the plurality of features, to a machine-learning model that has been trained to predict differential information based on the differences determined for the plurality of features; and
forecast a value of a target at the future time based on the differential information.

2. The method of Claim 1, wherein forecasting the value of the target based on the differential information comprises aggregating the differential information with a past value of the target at the past time.

3. The method of Claim 2, further comprising using the at least one hardware processor to:
receive a dataset comprising historical data; and
in each of the one or more iterations, preprocess the dataset to derive the past value of the target.

4. The method of any of Claims 1 to 3, further comprising using the at least one hardware processor to:
receive a dataset comprising historical and forecasted data; and
in each of the one or more iterations, preprocess the dataset to derive the past value and the forecasted value for each of the plurality of features.

5. The method of any one of Claims 1 to 4, wherein the differential information comprises a predicted change in the value of the target, wherein forecasting the value of the target based on the differential information preferably comprises adding the predicted change in the value of the target to a past value of the target at the past time.

6. The method of any one of Claims 1 to 4, wherein the differential information comprises a probability distribution of a predicted change in the value of the target, wherein forecasting the value of the target based on the differential information preferably comprises aggregating the probability distribution with a past value of the target at the past time.

7. The method of any one of Claims 1 to 6, wherein, for each of at least one of the plurality of features, determining the difference between the past value and the forecasted value of the at least one feature comprises:
receiving one or more variables related to the at least one feature; and
inputting the one or more variables to an intermediate machine-learning model that has been trained to predict a difference between the past value and the forecasted value of the at least one feature based on the one or more variables.

8. The method of Claim 7, wherein the at least one feature is two or more of the plurality of features, wherein the one or more variables related to one of the two or more features preferably overlap with the one or more variables related to at least one other one of the two or more features.

9. The method of Claim 8,
wherein, for a first one of the two or more features, the one or more variables related to that first feature are input to a first intermediate machine-learning model to determine the difference between the past and forecasted values for the first feature,
wherein, for a second one of the two or more features, the one or more variables related to that second feature are input to a second intermediate machine-learning model to determine the difference between the past and forecasted values for the second feature, and
wherein the first intermediate machine-learning model is different from the second intermediate machine-learning model.

10. The method of any one of Claims 1 to 9, wherein the one or more iterations are a plurality of iterations, and wherein the past time is successively incremented in each of the plurality of iterations, such that the value of the target is forecasted for each of a plurality of time points spanning a time frame.

11. The method of any one of Claims 1 to 10, wherein the target comprises an energy price, and wherein the plurality of features is associated with an electrical system, wherein the plurality of features preferably comprises one or both of:
one or more parameters of weather in an environment of the electrical system; or
one or more parameters of electrical load in the electrical system.

12. The method of Claim 11,
further comprising using the at least one hardware processor to, after forecasting the value of the energy price at the future time, generate a market request based on the forecasted value of the energy price at the future time, and, when the market request comprises a bid to sell energy at the forecasted value of the energy price, further based on a generation capacity of the electrical system at the future time, or, when the market request comprises an offer to sell energy at the forecasted value of the energy price, further based on a load of the electrical system at the future time; and
preferably further comprising using the at least one hardware processor to, after generating the market request:
send the market request to an energy market;
receive an acceptance of the market request; and
at the future time, control the electrical system to, when the market request comprises a bid, generate power according to the accepted market request, or, when the market request comprises an offer, consume power according to the accepted market request.

13. The method of any of Claims 1 to 12, wherein the machine-learning model comprises a random forest algorithm, a gradient-boosting algorithm, a regression algorithm, a support vector machine, or an artificial neural network.

14. A system comprising:
at least one hardware processor; and
software that is configured to, when executed by the at least one hardware processor, in each of one or more iterations,
for each of a plurality of features, determine a difference between a past value of the feature at a past time and a forecasted value of the feature at a future time,
input the differences, determined for the plurality of features, to a machine-learning model that has been trained to predict differential information based on the differences determined for the plurality of features, and
forecast a value of a target based on the differential information.

15. A non-transitory computer-readable medium having instructions stored thereon, wherein the instructions, when executed by a processor, cause the processor to, in each of one or more iterations:
for each of a plurality of features, determine a difference between a past value of the feature at a past time and a forecasted value of the feature at a future time;
input the differences, determined for the plurality of features, to a machine-learning model that has been trained to predict differential information based on the differences determined for the plurality of features; and
forecast a value of a target based on the differential information.
